# EUROPÄISCHE PATENTSCHRIFT

(11) **EP 1 117 701 B1**
(45) Veröffentlichungstag und Bekanntmachung des Hinweises auf die Patenterteilung: **03.11.2004**
(21) Anmeldenummer: 99942857.6
(22) Anmeldetag: 11.08.1999
(51) Int. Cl.: C08F 6/00

(54) **VERFAHREN ZUR ELIMINIERUNG VON FORMAMID AUS N-VINYLFORMAMIDEINHEITEN ENTHALTENDEN POLYMERISATEN**
METHOD FOR ELIMINATING FORMAMIDE FROM POLYMERIZATES CONTAINING N-VINYL FORMAMIDE UNITS
PROCEDE POUR ELIMINER DU FORMAMIDE DANS DES POLYMERISATS CONTENANT DES MOTIFS N-VINYLFORMAMIDE

(30) Priorität: 14.08.1998 DE 19836992
(43) Veröffentlichungstag der Anmeldung: 25.07.2001
(73) Patentinhaber: BASF AKTIENGESELLSCHAFT, 67056 Ludwigshafen (DE)
(72) Erfinder: NIESSNER, Manfred, D-67105 Schifferstadt (DE); RÜBENACKER, Martin, D-67122 Altrip (DE); MAHR, Norbert, D-67117 Limburgerhof (DE)
(86) Internationale Anmeldenummer: PCT/EP1999/005902
(87) Internationale Veröffentlichungsnummer: WO 2000/009573

(56) Entgegenhaltungen:
- DE-A- 19 612 432
- US-A- 4 421 602

## Beschreibung

Die Erfindung betrifft ein Verfahren zur Eliminierung von Formamid aus N-Vinylformamideinheiten enthaltenden Polymerisaten durch Behandlung der mit Formamid verunreinigten Polymerisate mit Säuren oder Basen.

N-Vinylformamideinheiten enthaltende Polymerisate sind bekannt. Sie werden durch radikalische Polymerisation von N-Vinylformamid gegebenenfalls in Gegenwart von anderen, damit copolymerisierbaren monoethylenisch ungesättigten Monomeren hergestellt, vgl. US-A-4421602, EP-A-0374646, EP-A-0438744, EP-A-0473881, EP-A-0510246, US-A-5334287, DE-A-19526626 und DE-A-19515943. Die Polymerisate können beispielsweise durch Polymerisieren der Monomeren nach Art einer Lösungspolymerisation, einer Fällungspolymerisation oder auch nach dem Verfahren der Wasser-in-Öl-Emulsionspolymerisation hergestellt werden. Vinylformamideinheiten enthaltende Polymerisate werden in vielen Fällen durch Behandlung mit Basen oder Säuren bei höheren Temperaturen unter Abspaltung der Formylgruppe aus den einpolymerisierten Vinylformamideinheiten in Vinylamineinheiten enthaltende Polymerisate überführt. So werden beispielsweise gemäß der Lehre der US-A-4421602 Homopolymerisate von N-Vinylformamid unter Abspaltung von 10 bis 90 mol-% der Formylgruppen in Polymerisate überführt, die Vinylamin- und Vinylformamideinheiten enthalten. Die Abspaltung von Formylgruppen aus Copolymerisaten von N-Vinylformamid mit anderen ethylenisch ungesättigten Monomeren ist aus der EP-A-0216387 bekannt. Sie erfolgt in Gegenwart von Säuren oder Basen bei Temperaturen von 20 bis 100°C. Je nach den angewandten Reaktionsbedingungen erhält man eine teilweise oder vollständige Abspaltung von Formylgruppen unter Bildung von Aminogruppen aus den Vinylformamidgruppen enthaltenden Polymerisaten. Falls die Polymerisate als Verunreinigung Formamid enthalten, erfolgt während der Abspaltung der Formylgruppen aus den Vinylformamideinheiten enthaltenden Polymerisaten auch eine Hydrolyse des Formamids, so daß die Vinylamineinheiten enthaltenden Polymeren praktisch nicht mehr mit Formamid verunreinigt sind.

Aus der US-A-5478553 ist die Verwendung von N-Vinylformamideinheiten enthaltenden Polymerisaten als Conditioner sowie als Festiger und Gelbildner für die Haarpflege bekannt. In der EP-A-0452758 wird die Anwendung von N-Vinylformamideinheiten enthaltenden Polymerisaten als Hilfsstoff in kosmetischen und pharmazeutischen Zubereitungen beschrieben. Für solche Einsatzzwecke dürfen die Polymeren jedoch keine physiologisch bedenklichen Verunreinigungen wie beispielsweise Formamid enthalten. N-Vinylformamid enthält herstellungsbedingt Formamid als Verunreinigung, das nicht ohne weiteres mit Hilfe einer Destillation aus dem Monomeren zu entfernen ist. Daher polymerisiert man das geringe Mengen an Formamid enthaltende N-Vinylformamid, so daß sich nach der Polymerisation das Problem der Reinigung des Polymeren von restlichem Formamid stellt.

Der vorliegenden Erfindung liegt daher die Aufgabe zugrunde, ein Verfahren zur Entfernung von Formamid aus N-Vinylformamideinheiten enthaltenden Polymerisaten zur Verfügung zu stellen, wobei die N-Vinylformamideinheiten im Polymerisat nach Möglichkeit vollständig erhalten bleiben sollen.

Die Aufgabe wird erfindungsgemäß gelöst mit einem Verfahren zur Eliminierung von Formamid aus N-Vinylformamideinheiten enthaltenden Polymerisaten, wenn man Formamid enthaltende Polymerisate mit 1 bis 2 Moläquivalenten, bezogen auf 1 Moläquivalent Formamid, einer Säure oder einer Base, in einem wässrigen Medium, bei Temperaturen von 20 bis 90°C behandelt.

Die N-Vinylformamideinheiten enthaltenden Polymerisate können dabei in Form einer wäßrigen Lösung, einer Lösung in einem wasserlöslichen Lösemittel oder auch in Mischungen aus Wasser und einem in Wasser löslichen Lösemittel, einer wäßrigen Suspension oder einer Wasser-in-Öl-Emulsion vorliegen. Der Polymergehalt in diesen Systemen beträgt dabei z.B. 3 bis 50, vorzugsweise 5 bis 30 Gew.-%. Der Gehalt an Formamid im Polymerisat hängt im wesentlichen von der Menge an einpolymerisiertem N-Vinylformamid ab. Er liegt beispielsweise bei 0,001 bis 7,5 Gew.-%, vorzugsweise 0,01 bis 3,0 Gew.-% und meistens bei 0,02 bis 0,5 Gew.-%. N-Vinylformamideinheiten enthaltende Polymerisate sind beispielsweise aus den oben zum Stand der Technik angegebenen Literaturstellen bekannt. Das erfindungsgemäße Verfahren ist auf alle Polymerisate anwendbar, die N-Vinylformamid einpolymerisiert enthalten. Dabei kommen sowohl Homo- als auch Copolymerisate des N-Vinylformamids sowie Pfropfcopolymerisate davon in Betracht. Als mögliche Comonomere für N-Vinylformamid eignen sich beispielsweise andere N-Vinylcarbonsäureamide wie N-Vinyl-N-methylformamid, N-Vinylacetamid, N-Vinyl-N-methylacetamid, N-Vinyl-N-ethylformamid, N-Vinyl-N-n-propylformamid, N-Vinyl-N-isopropylformamid, N-Vinyl-N-isobutylformamid, N-Vinyl-N-methylpropionamid, N-Vinyl-N-butylacetamid und N-Vinyl-N-methylpropionamid.

Als Comonomere für N-Vinylformamid kommen weiterhin monoethylenisch ungesättigte Carbonsäuren mit 3 bis 8 C-Atomen sowie die wasserlöslichen Salze dieser Monomeren in Betracht. Zu dieser Gruppe gehören z.B. Acrylsäure, Methacrylsäure, Dimethylacrylsäure, Ethacrylsäure, Maleinsäure, Citraconsäure, Methylenmalonsäure, Allylessigsäure, vinylessigsäure, Crotonsäure, Fumarsäure, Mesaconsäure und Itaconsäure. Aus dieser Gruppe von Monomeren verwendet man vorzugsweise Acrylsäure, Methacrylsäure, Maleinsäure oder auch Mischungen der genannten Carbonsäuren, insbesondere Mischungen aus Acrylsäure und Methacrylsäure. Die ungesättigten Carbonsäuren können sowohl in freier Form als auch in partiell oder in vollständig mit Basen neutralisierter Form, z.B. mit Natronlauge, Kalilauge, Calciumhydroxid oder Ammoniak, polymerisiert werden.

Weitere geeignete Comonomere sind beispielsweise Ester, Amide und Nitrile der angegebenen Carbonsäuren. Die Acrylsäure- und Methacrylsäureester leiten sich vorzugsweise von gesättigten, einwertigen Alkoholen mit 1 bis 4 Kohlenstoffatomen bzw. gesättigten zweiwertigen, 2 bis 4 Kohlenstoffatome enthaltenden Alkoholen ab. Beispiele für diese Ester sind Acrylsäuremethylester, Methacrylsäuremethylester, Acrylsäureethylester, Methacrylsäureethylester, Acrylsäure-n-propylester, Methacrylsäure-n-propylester, Acrylsäureisopropylester, Methacrylsäureisopropylester und die Ester der Acrylsäure und Methacrylsäure, die sich von isomeren Butanolen ableiten, so wie Hydroxyethylacrylat, Hydroxyethylmethacrylat, Hydroxypropylacrylat, Hydroxypropylmethacrylat, Hydroxybutylacrylat, Hydroxyisobutylacrylat und Hydroxyisobutylmethacrylat. Zu nennen sind auch Acrylamid, Methacrylamid, N,N-Dimethylacrylamid, N-tert. -Butylacrylamid, Acrylnitril, Methacrylnitril, Dimethylaminoethylacrylat, Dimethylaminoethylmethacrylat, Diethylaminoethylacrylat, Diethylaminoethylmethacrylat sowie die Salze der zuletzt genannten Monomeren mit Carbonsäuren oder Mineralsäuren sowie die quaternierten Produkte.

Außerdem können als Comonomere für die Copolymerisation von N-Vinylformamid Vinylester, wie Vinylformiat, Vinylacetat und Vinylpropionat eingesetzt werden. Geeignet sind außerdem N-Vinylpyrrolidon, N-Vinylcaprolactam, 1-Vinylimidazol, 2-Methyl-1-vinylimidazol und 4-Methyl-1-vinylimidazol, Vinylsulfonsäure, Allylsulfonsäure, Methallylsulfonsäure, Styrolsulfonsäure, Vinylphosphonsäure, Allylphosphonsäure und Diallyldimethylammoniumchlorid. Es ist selbstverständlich auch möglich, Mischungen der genannten Monomeren einzusetzen.

Die genannten Comonomeren können in den N-Vinylformamid enthaltenden Copolymerisaten beispielsweise zu 1 bis 99 mol-% in einpolymerisierter Form vorliegen.

Darüberhinaus können Homo- und Copolymerisate des N-Vinylformamids dahingehend modifiziert sein, daß man die Polymerisation in Gegenwart von Verbindungen vornimmt, die mindestens zwei ethylenisch ungesättigte nicht konjugierte Doppelbindungen im Molekül aufweisen. Die Mitverwendung dieser Monomeren bei der Polymerisation bewirkt eine Erhöhung des Molekulargewichts des Polymeren. Besonders geeignet sind beispielsweise Alkylenbisacrylamide wie Methylenbisacrylamid und N,N'-Acryloylethylendiamin, N,N'-Divinylethylenharnstoff, N,N'-Divinylpropylenharnstoff, Ethylidenbis-3-(N-vinylpyrrolidon), N,N'-Divinyldiimidazolyl-(2,2')-butan und 1,1'-Bis(3,3'-vinylbenzimidazolin-2-on)-1,4-butan. Andere geeignete Vernetzer sind beispielsweise Alkylenglykoldi(meth)-acrylate wie Ethylenglykoldiacrylat, Ethylenglykoldimethacrylat, Tetraethylenglykoldiacrylat, Tetraethylenglykoldimethacrylat, Diethylenglykolacrylat, Diethylenglykolmethacrylat, aromatische Divinylverbindungen wie Divinylbenzol und Divinyltoluol sowie Vinylacrylat, Allylacrylat, Allylmethacrylat, Divinyldioxan, Pentaerythrittriallylether sowie Gemische der Vernetzer. Die Vernetzer werden in Mengen von 0,1 bis 10, vorzugsweise 1 bis 4 Gew.-%, bezogen auf die bei der Polymerisation eingesetzten Monomeren angewendet.

Eine weitere Möglichkeit der Modifizierung bietet die Pfropfung von N-Vinylformamid auf andere Polymerisate. Zur Herstellung derartiger Pfropfpolymere wird N-Vinylformamid, gegebenenfalls zusammen mit anderen, zuvor genannten Comonomeren in Gegenwart der Pfropfgrundlage in der zuvor beschriebenen weise polymerisiert. Die US-A-5334287 beschreibt beispielsweise die Pfropfung von N-Vinylformamid auf Naturstoffe auf der Basis von Sacchariden. Als Pfropfgrundlage eignen sich dabei Mono- und Oligosaccharide wie Glucose, Fructose, Galaktose, Ribose, Mannose, Saccharose, Lactose und Raffinose oder Polysaccaride wie Pektin, Algin, Chitin, Chitosan, Heparin, Agar, Gummiarabicum, Johannisbrotkornmehl, Guar-Gummi, Xanthan, Dextran und dergleichen sowie Pentosane wie Xylan und Araban. In Frage kommen auch native Stärken aus der Gruppe Maisstärke, Kartoffelstärke, Weizenstärke, Reisstärke, Tapiokastärke, Sagostärke, Sorghunstärke, Maniokstärke, Erbsenstärke oder solche Stärken, die einen Amylopektingehalt von mindestens 80 Gew.-% haben, wie Wachsmaisstärke oder Wachskartoffelstärke, enzymatisch oder hydrolytisch abgebaute Stärken wie beispielsweise Weiß- und Gelbdextrine sowie Maltodextrine, oder auch oxidierte Stärken, wie z.B. Dialdehydstärke.

Schließlich sind in dieser Reihe noch chemisch modifizierte Saccharide wie z.B. Carboxymethylcellulose zu nennen.

Als Pfropfgrundlage eignen sich desweiteren Polymere, die Alkylenoxideinheiten enthalten, insbesondere Homo- und Copolymere von C₂- bis C₄-Alkylenoxiden, die durch Polymerisation von Ethylenoxid, Propylenoxid, n-Butylenoxid, Isobutylenoxid oder Tetrahydrofuran zugänglich sind. Solche Polyalkylenoxide sind in der DE-A-19515943 beschrieben. Bei diesen Polymerisaten kann es sich auch um Additionsprodukte von C₂- bis C₄-Alkylenoxiden an vorwiegend langkettige Alkohole, Phenole, Carbonsäuren und Amine handeln. Aus der DE-A-19526626 sind entsprechende Pfropfpolymerisate auf Polymerisaten, die Einheiten von vinylestern gesättigter C₁- bis C₄-Carbonsäuren, wie Vinylformiat, Vinylacetat, Vinylpropionat und Vinyl-n-butyrat, und/oder Vinylalkohol-Einheiten enthalten, bekannt.

Die Herstellung der N-Vinylformamideinheiten enthaltenden Polymerisaten erfolgt nach den bekannten Verfahren der Lösungs-, Fällungs-, Suspensions- oder Emulsionspolymerisation unter Verwendung von Verbindungen, die unter den Polymerisationsbedingungen Radikale bleiben. Die Polymerisationstemperaturen liegen üblicherweise in dem Bereich von z.B. 30 bis 200, vorzugsweise 40 bis 110°C. Geeignete Initiatoren sind beispielsweise Azo- und Peroxyverbindungen sowie die üblichen Redoxinitiatorsysteme, wie Kombinationen aus Wasserstoffperoxid und Hydrazin. Diese Systeme können gegebenenfalls zusätzlich noch geringe Mengen eines Schwermetallsalzes enthalten. Als Polymerisationsinitiator werden vorzugsweise wasserlösliche Azoverbindungen, wie 2,2'-Azobis(2-methyl-propionamidin)dihydrochlorid, 2,2'-azo-bis-(4-methoxy-2,4-dimethylcaleronitril) und 2,2'-Azo-bis-(2-methyl-N-phenylpropionamidin)-dihydrochlorid verwendet. Um Polymerisate mit niedrigem K-Wert herzustellen, wird die Polymerisation zweckmäßigerweise in Gegenwart von Reglern, wie z.B. Mercaptoverbindungen, Allylverbindungen, Aldehyden oder Hydrazin durchgeführt.

Die so erhältlichen Polymeren haben K-Werte von 10 bis 300, vorzugsweise 30 bis 250. Die K-Werte werden bestimmt nach H. Fikentscher, Cellulose-Chemie, Band 13, 58 bis 64 und 71 bis 74 (1932), in 5 %iger wäßriger Kochsalzlösung bei pH-Wert 7, einer Temperatur von 25°C und einer Polymerkonzentration von 0,1 Gew.-%.

Um Formamid aus N-Vinylformamideinheiten enthaltenden Polymerisaten zu entfernen, behandelt man die Polymerisate erfindungsgemäß mit 1 bis 2 Moläquivalenten einer Säure oder einer Base, bezogen auf 1 Moläquivalent Formamid im Polymerisat. Die Hydrolyse wird dabei in der Weise durchgeführt, daß N-Vinylformamideinheiten sowie andere hydrolysierbare Einheiten im Polymerisat nicht wesentlich verändert werden. Als Säure verwendet man beispielsweise Mineralsäuren, Carbonsäuren, Sulfonsäuren oder Mischungen der genannten Säuren. Geeignete Mineralsäuren sind beispielsweise Halogenwasserstoffe, die gasförmig oder in wäßriger Lösung eingesetzt werden können. Vorzugsweise verwendet man Salzsäure, Schwefelsäure, Salpetersäure oder Phosphorsäure. Von den Carbonsäuren sind insbesondere Ameisensäure und Essigsäure geeignet. Außerdem kommen aliphatische oder aromatische Sulfonsäuren in Betracht. Der pH-Wert bei der sauren Hydrolyse beträgt beispielsweise 0 bis 5 und liegt vorzugsweise in dem Bereich von 0 bis 3. Pro Formamidäquivalent benötigt man 1 bis 2, vorzugsweise 1,5 bis 1,8 Moläquivalente einer Säure.

Die Hydrolyse kann auch mit Hilfe von Basen vorgenommen werden, z.B. mit Metallhydroxiden, insbesondere mit Alkalimetall- oder Erdalkalimetallbasen, Ammoniak oder Aminen. Vorzugsweise verwendet man als Basen Natriumhydroxid oder Kaliumhydroxid. Die Hydrolyse vom Formamid kann auch mit Ammoniak oder Aminen wie beispielsweise Butylamin, Ethanolamin oder Triethanolamin durchgeführt werden. Pro Formamidäquivalent benötigt man bei der basischen Hydrolyse 1 bis 2, vorzugsweise 1,2 bis 1,5 Moläquivalente einer Base. Der pH-Wert beträgt bei der basischen Hydrolyse beispielsweise 9 bis 12 und liegt vorzugsweise in dem Bereich von 10 bis 11.

Durch Behandlung mit Säuren oder Basen kann man das störende Formamid sowohl aus Polymerlösungen, Polymersuspensionen oder Polymeremulsionen entfernen. Die Behandlung der Polymerisate erfolgt in einem wäßrigen Medium bei Temperaturen von 20 bis 90, vorzugsweise 50 bis 80°C. Die Reaktionszeit beträgt beispielsweise 0,5 bis 5, meistens 2 bis 4 Stunden. Unter diesen Reaktionsbedingungen werden maximal 3 %, in der Regel 0 bis 2 % der einpolymerisierten N-Vinylformamideinheiten hydrolysiert. Im Anschluß an die Hydrolyse des Formamids wird das Reaktionsgemisch, sofern die Hydrolyse mit Säuren erfolgt ist, mit Basen auf einen pH-Wert von beispielsweise 4 bis 8,5, vorzugsweise 5 bis 8 eingestellt. Sofern die Hydrolyse des Formamids mit Basen durchgeführt wurde, neutralisiert man das Reaktionsgemisch mit einer Säure und stellt einen pH-Wert ein, der vorzugsweise in dem Bereich von 5 bis 8 liegt.

Es war nicht zu erwarten, daß unter den oben angegebenen Reaktionsbedingungen Formamid allein hydrolysiert wird und nicht die N-Vinylformamideinheiten in den Polymerisaten, zumindest jedoch nicht in einem nennenswerten Umfang. Die nach dem erfindungsgemäßen Verfahren behandelten Polymerisate, die N-Vinylformamideinheiten enthalten, weisen entweder kein Formamid mehr auf oder enthalten Formamid allenfalls nur noch in Spuren, z.B. weniger als 100 ppm.

Die in den Beispielen angegebenen K-Werte der Polymerisate wurde nach H. Fikentscher, Cellulose-Chemie, Band 13, 58 - 64 und 71 - 74, (1932) in 5 %iger wäßriger Kochsalzlösung bei pH-Wert 7, einer Temperatur von 25°C und einer Polymerkonzentration von 0,1 Gew.-% bestimmt. Der Formamidgehalt der Polymerisate wurde vor und nach der Behandlung mit Hilfe der Hochdruckflüssigkeitschromatographie gemessen. Die bei der Hydrolyse gebildete Menge an Formiat wurde enzymatisch bestimmt. Unter Berücksichtigung des Anteils, der aus Formamid freigesetzt wird, errechnet sich daraus der Hydrolysegrad der einpolymerisierten N-Vinylformamideinheiten.

### Beispiel 1

In einer mit Rückflußkühler und Thermometer ausgestatteten Rührapparatur wurden 500 g einer 20,4 gew.-%igen wäßrigen Lösung eines Polyvinylformamids vom K-Wert 90 mit einem Formamidgehalt von 0,37 Gew.-% (41,1 mmol) vorgelegt. Man fügte 7,1 g (73,9 mmol) 38 %ige Salzsäure zu und erhitzte das Reaktionsgemisch 4 Stunden auf eine Temperatur von 80°C. Nach dieser Zeit wurde der Formamidgehalt bestimmt. Er betrug 0,05 Gew.-%. Der Hydrolysegrad der N-Vinylformamideinheiten lag bei 1,0 %.

### Beispiel 2

In einer mit einem Rückflußkühler und einem Thermometer ausgestatteten Rührapparatur wurden 500 g einer 20,4 gew.-%igen wäßrigen Lösung eines Polyvinylformamids von K-Wert 90 mit einem Formamidgehalt von 0,37 Gew.-% (41,1 mmol) vorgelegt. Man setzte dann 7,2 g (45,0 mmol) einer 25 gew.-%igen Natronlauge zu und erhitzte das Reaktionsgemisch 4 Stunden auf eine Temperatur von 80°C. Die Analyse ergab einen Formamidgehalt von 0,09 Gew.-% und einen Hydrolysegrad der N-Vinylformamideinheiten im Polymerisat von 1,0 %.

### Beispiel 3

Beispiel 2 wird mit der Ausnahme wiederholt, daß man 9,2 g (57,5 mmol) einer 25 %igen wäßrigen Natronlauge zu der wäßrigen Lösung des Polyvinylformamids zusetzt. Nach einer Reaktionszeit von 4 Stunden ist kein Formamid mehr nachweisbar. Der Hydrolysegrad der N-vinylformamideinheiten des Polymerisats betrug 1,4 %.

### Beispiel 4

Beispiel 2 wird mit der Ausnahme wiederholt, daß man 11,5 g (71,9 mmol) einer 25 %igen wäßrigen Natronlauge zu der wäßrigen Lösung des Polyvinylformamids zusetzt. Nach einer Reaktionszeit von 4 Stunden war kein Formamid mehr nachweisbar. Der Hydrolysegrad der N-Vinylformamideinheiten des Polymerisats betrug 2,9 %.

## Patentansprüche

1. Verfahren zur Eliminierung von Formamid aus N-Vinylformamideinheiten enthaltenden Polymerisaten, **dadurch gekennzeichnet, daß** man mit Formamid verunreinigte Polymerisate mit 1 bis 2 Moläquivalenten, bezogen auf 1 Moläquivalent Formamid im Polymerisat, einer Säure oder einer Base, in einem wässrigen Medium, bei Temperaturen von 20 bis 90°C behandelt.

2. Verfahren nach Anspruch 1, wobei der Gehalt an Formamid im Polymerisat höchstens 7,5 Gew.-% beträgt.

3. Verfahren nach Anspruch 1, **dadurch gekennzeichnet, daß** man 1,5 bis 1,8 Moläquivalente, bezogen auf 1 Moläquivalent Formamid, einer Säure einsetzt.

4. Verfahren nach einem der Ansprüche 1 bis 3, **dadurch gekennzeichnet, daß** man als Säure Mineralsäuren, Carbonsäuren, Sulfonsäuren oder Mischungen der genannten Säuren einsetzt.

5. Verfahren nach Anspruch 1, **dadurch gekennzeichnet, daß** man 1,2 bis 1,5 Moläquivalente, bezogen auf 1 Moläquivalent Formamid, einer Base einsetzt.

6. Verfahren nach Anspruch 1, **dadurch gekennzeichnet, daß** man als Basen Alkalimetall- oder Erdalkalimetallbasen, Ammoniak oder Amine einsetzt.

7. Verfahren nach einem der Ansprüche 1 bis 6, **dadurch gekennzeichnet, daß** man die Behandlung der Polymerisate in einer wäßrigen Lösung bei Temperaturen von 50° bis 80°C durchführt.

## Claims

1. A process for the elimination of formamide from polymers containing N-vinylformamide units, which comprises treating polymers contaminated with formamide with from 1 to 2 mole-equivalents, based on 1 mole-equivalent of formamide in the polymer, of an acid or a base at from 20 to 90°C in an aqueous medium.

2. A process as claimed in claim 1, where the formamide content in the polymer is at most 7.5% by weight.

3. A process as claimed in claim 1, wherein from 1.5 to 1.8 mole-equivalents, based on 1 mole-equivalent of formamide, of an acid are used.

4. A process as claimed in any of claims 1 to 3, wherein the acids used are mineral acids, carboxylic acids, sulfonic acids or mixtures of said acids.

5. A process as claimed in claim 1, wherein from 1.2 to 1.5 mole-equivalents, based on 1 mole-equivalent of formamide, of a base are used.

6. A process as claimed in claim 1, wherein the bases used are alkali metal or alkaline earth metal bases, ammonia or amines.

7. A process as claimed in any of claims 1 to 5, wherein the treatment of the polymers is carried out in an aqueous solution at from 50 to 80°C.

## Revendications

1. Procédé pour l'élimination du formamide de polymères contenant des unités N-vinylformamide, **caractérisé par le fait qu'**on traite des polymères contaminés par du formamide avec 1 à 2 équivalents molaires, par rapport à 1 équivalent de formamide dans le polymère, d'un acide ou d'une base, dans un milieu liquide, à des températures de 20 à 90°C.

2. Procédé selon la revendication 1, dans lequel la teneur en formamide dans le polymère vaut au plus 7,5 % en poids.

3. Procédé selon la revendication 1, **caractérisé par le fait qu'**on utilise 1,5 à 1,8 équivalents molaires, par rapport à 1 équivalent molaire de formamide, d'un acide.

4. Procédé selon l'une des revendications 1 à 3, **caractérisé par le fait qu'**on utilise comme acide des acides minéraux, des acides carboxyliques, des acides sulfoniques ou des mélanges des acides indiqués.

5. Procédé selon la revendication 1, **caractérisé par le fait qu'**on utilise 1,2 à 1,5 équivalents molaires, par rapport à 1 équivalent molaire de formamide, d'une base.

6. Procédé selon la revendication 1, **caractérisé par le fait qu'**on utilise comme bases des bases de métal alcalin ou de métal alcalino-terreux, de l'ammoniac ou des amines.

7. Procédé selon l'une des revendications 1 à 6, **caractérisé par le fait qu'**on conduit le traitement des polymères dans une solution aqueuse à des températures de 50° à 80°C.
